Europäisches Patentamt

European Patent Office

Office européen des brevets

(19)

(11) Veröffentlichungsnummer : **0 373 505 B1**

(12)

# EUROPÄISCHE PATENTSCHRIFT

(45) Veröffentlichungstag der Patentschrift :
02.12.92 Patentblatt 92/49

(51) Int. Cl.⁵ : **E05D 5/02, F16B 5/02**

(21) Anmeldenummer : **89122563.3**

(22) Anmeldetag : **07.12.89**

(54) Grundplatte zur Befestigung eines Möbelscharniers, oder dergleichen.

(30) Priorität : **13.12.88 DE 3841933**

(43) Veröffentlichungstag der Anmeldung :
**20.06.90 Patentblatt 90/25**

(45) Bekanntmachung des Hinweises auf die
Patenterteilung :
**02.12.92 Patentblatt 92/49**

(84) Benannte Vertragsstaaten :
**AT DE ES FR GB IT**

(56) Entgegenhaltungen :
**DE-U- 8 620 441**
**DE-U- 8 631 650**
**US-A- 3 255 658**

(73) Patentinhaber : **Arturo Salice S.p.A.**
**Via Provinciale Novedratese 10**
**I-22060 Novedrate (Como) (IT)**

(72) Erfinder : **Salice, Luciano**
**Via del Ronco, 30**
**I-22060 Carimate (IT)**

(74) Vertreter : **Gossel, Hans K., Dipl.-Ing.**
**Lorenz-Seidler-Gossel et al**
**Widenmayerstrasse 23**
**W-8000 München 22 (DE)**

EP 0 373 505 B1

**Beschreibung**

Die Erfindung betrifft eine Grundplatte zur Befestigung eines Scharnierarms eines Möbelscharniers o.dgl., bestehend aus einer mit Bohrungen für Befestigungsschrauben versehenen und an einer Tragwand o.dgl. befestigbaren Basisplatte und einer diese zumindest teilweise übergreifenden oder überdeckenden und auf dieser quer zum Scharnierarm o.dgl. verschieblich geführten Deckplatte mit Befestigungseinrichtungen für den Scharnierarm, wobei in die Bohrungen der Basisplatte vormontierte Befestigungsschrauben teilweise eingeschraubt sind, die Langlöcher der Deckplatte durchsetzen.

Bei einer aus der DE-GMS 86 20 441 bekannten höhenverstellbaren Grundplatte dieser Art besteht die Basisplatte aus Kunststoff, wobei die Bohrungen der Basisplatte zumindest teilweise von Sockeln umgeben sind, die die Langlöcher teilweise durchsetzen und Führungen für die Flanken der Langlöcher bilden, so daß die Sockel der Basisplatte mit Preßsitz im mittleren Bereich der Langlöcher der Deckplatte gehaltert werden können. Diese Fixierung der Basisplatte an der Deckplatte in der Weise, daß sich die Sockel und damit auch die Bohrungen der Basisplatte im mittleren Bereich der Langlöcher der Deckplatte befinden, ist zweckmäßig, weil üblicherweise die Bohrungen an der Tragwand o.dgl. lagerichtig angebracht sind, so daß eine nachträgliche Justierung in der Höhe nicht erforderlich ist. Auch wenn diese bekannte Grundplatte ohne vormontierte Befestigungsschrauben geliefert wird, besteht die Gefahr, daß während des Transportes oder vor der Montage die Basisplatte von der Deckplatte beispielsweise durch zufälligen Druck auf die Basisplatte getrennt wird, so daß die die Montage der Grundplatte erleichternde zentrierte Lage der Basisplatte zur Deckplatte verlorengeht.

Aufgabe der Erfindung ist es daher, bei einer Grundplatte der eingangs angegebenen Art eine versehentliche Trennung von Basis- und Deckplatte vor der Montage zu verhindern.

Erfindungsgemäß wird diese Aufgabe bei einer Grundplatte der gattungsgemäßen Art durch die kennzeichnenden Merkmale des Patentanspruchs 1 gelöst.

Bei der erfindungsgemäßen Grundplatte ist die Basisplatte durch die nur teilweise in die Basisplatte eingeschraubten Befestigungsschrauben dadurch sicher in ihrer zentrierten Lage in Anlage an die Deckplatte gehalten, daß sich jeweils ein Flankenabschnitt jedes Gewindes auf dem oberen Randbereich des zugehörigen Langloches abstützt, während der diametral gegenüberliegende Bereich desselben Gewindeganges bereits in der Basisplatte unterhalb der Deckplatte liegt, so daß die Basisplatte in ihrer zentrierten Stellung durch die vormontierten Befestigungsschrauben an der Deckplatte fixiert ist. Dabei sind die Befestigungsschrauben in ihrer senkrechten voreingeschraubten Stellung in der Basisplatte sichergehalten, so daß der halternde Flankenabschnitt des Gewindeganges nicht durch eine eventuelle Schrägstellung der Befestigungsschraube von dem Rand des Langloches abrutschen kann. Die Befestigungsschrauben sind zweckmäßigerweise soweit durch die Basisplatte hindurchgeschraubt, daß deren vorderen Enden diese durchsetzen und bei der Montage bereits in die vorgebohrten Löcher der Tragwand eingeführt werden können.

Bei der erfindungsgemäßen Grundplatte lassen sich die vormontierten Befestigungsschrauben dadurch in ihrer zentrierten Stellung in den Langlöchern der Deckplatte halten, daß die die vormontierten Befestigungsschrauben tragende Basisplatte kraftschlüssig an die Deckplatte angedrückt ist. Bei der erfindungsgemäßen Grund- oder Befestigungsplatte ist die Basisplatte kraftschlüssig, d.h. mit Preßsitz, an die Deckplatte in ihrer zentrierten Lage angedrückt. Diese zentrierte Lage kann entweder durch die vormontierten Befestigungsschrauben oder aber auch durch die die Bohrungen der Basisplatte umgebenden und die Langlöcher der Deckplatte durchsetzenden Sockel oder durch die die Seiten der Basisplatte übergreifenden Ränder der Deckplatte im Bereich der seitlichen flanschartigen Lappen erfolgen. Eine durch die Befestigungsschrauben gesicherte zentrierte Stellung erleichtert die Montage, wenn die Bohrungen für die Befestigungsschrauben in dem Möbelteil lagerichtig eingebracht sind, was der Regelfall sein wird. Ist jedoch eine Anpassung erforderlich, läßt sich die Deckplatte relativ zu der Basisplatte durch Überwindung des Kraftschlusses verschieben.

Die Deckplatte der erfindungsgemäßen Grundplatte kann sowohl aus Stahlblech als auch aus Druckguß (Zamak) bestehen, während die Basisplatte wiederum vorzugsweise aus Kunststoff gefertigt ist.

Die Bohrungen für die Befestigungsschrauben sind im Bereich von Sockeln der Befestigungsplatte zweckmäßigerweise mit einem Bohrungsabschnitt versehen, dessen Durchmesser dem Kerndurchmesser der Befestigungsschrauben entspricht. Diese Ausgestaltung gewährleistet, daß beim Einschrauben der Befestigungsschrauben kein Material des Sockels in der Weise verdrängt wird, daß es zu einem Verklemmen unter Reibungserhöhung zwischen den der Führung dienenden Sockeln und den Flanken der Langlöcher kommt.

Zweckmäßigerweise sind die Bohrungen für die Befestigungsschrauben im Bereich der Sockel der Basisplatte mit einem weiteren, tieferliegenden Bohrungsabschnitt versehen, dessen Durchmesser kleiner als der Kerndurchmesser der Befestigungsschrauben ist.

Diese Ausgestaltung stellt sicher, daß die vormontierten Befestigungsschrauben in senkrechten Stellungen gehalten sind, so daß eine Schrägstellung der Befestigungsschrauben ausgeschlossen ist, die zu einem Abrutschen der halternden Flanke des Gewindeganges von dem Rand des Langloches führen könnte. Die Befestigungsschrauben lassen sich somit zu ihrer Vormontage teilweise in die Bohrungen der Basisplatte in der Weise einschrauben, daß ein Abschnitt der Flanke eines Gewindeganges am Rand des Langloches anliegt, während der diametral gegenüberliegende Teil des Gewindeganges schon unterhalb der Deckplatte in die Basisplatte eingeschnitten ist. Bei der erfindungsgemäßen Grundplatte läßt sich zur Höhenjustierung die Deckplatte relativ zu der Basisplatte verschieben, weil kein Gewindegang in die Flanken der Langlöcher einschneidet und dadurch die gewünschte Verschiebung verhindert. Da der Durchmesser des Gewindes der Befestigungsschrauben größer ist als die Breite der Langlöcher, können die halternden Flanken der Gewinde von den Rändern der Langlöcher nicht abrutschen, weil die vormontierten Befestigungsschrauben in ihrer senkrechten und eine Neigung ausschließenden Stellung in der Basisplatte gehalten sind. Der an einem Rand des Langloches anliegende Gewindeteil hält somit die Basisplatte auch dann sicher in ihrer zentrierten Stellung an der Deckplatte, wenn zufällig einmal ein Druck auf die Befestigungsschrauben während des Transportes oder vor der Montage ausgeübt werden sollte.

Mit Sicherheit schneidet der Teil des Gewindeganges, der diametral dem an dem oberen Rand des Langloches abgestützten Teil des Gewindeganges gegenüberliegt, in die Wandung der Bohrung des Basisteils unterhalb der Deckplatte ein, wenn die Steigung des Gewindes der Befestigungsschrauben größer ist als die doppelte Dicke der Deckplatte.

Zweckmäßigerweise entspricht die Steigung des Gewindes der Befestigungsschrauben der doppelten Dicke der Deckplatte im Randbereich der Langlöcher. Diese Ausgestaltung stellt sicher, daß Flank en eines Gewindeganges an dem oberen Rand des Langloches und an dem gegenüberliegenden unteren Rand des Langloches der Deckplatte anliegen und dadurch diametral gegenüberliegende Teile der Ränder des Langloches in einem Gewindegang der Befestigungsschraube fixiert sind.

Nach einer vorteilhaften Ausgestaltung der Erfindung ist vorgesehen, daß die Befestigungsschrauben mit einem doppelgängigen Gewinde versehen sind. Diese Ausgestaltung stellt sicher, daß sich Flanken der beiden Gewindegänge an gegenüberliegenden oberen Randbereichen des Langloches abstützen. Diese symmetrische Art der Abstützung gewährleistet einen besseren Halt.

Zweckmäßigerweist ist die Basisplatte auf ihrer Unterseite einstückig mit Dübeln versehen, deren Bohrungen mit den Bohrungen der Basisplatte fluchten. Diese Ausgestaltung ist insbesondere dann von besonderem Vorteil, wenn die Grundplatte bereits vormontiert am Scharnierarm geliefert wird. Denn die Tür läßt sich dann durch Einsetzen der Dübel in die vorgebohrten Befestigungslöcher schon an die Tragwand anhängen, bevor die Befestigungsschrauben vollständig eingeschraubt und dadurch die Dübel gespreizt worden sind.

Zweckmäßigerweise sind die Randbereiche der Langlöcher an ihren Ober- und Unterseiten mit Abschrägungen, Abrundungen oder die Dicke vermindernden Stufen versehen. Durch diese Ausgestaltung lassen sich die Befestigungsplatten an normale Befestigungsschrauben mit üblicher Steigung der Gewinde anpassen.

Nach einer anderen Ausgestaltung ist vorgesehen, daß die Breite der Langlöcher der Deckplatte den Kerndurchmesser der Befestigungsschrauben entsprechen. Bei dieser Ausgestaltung können die der Führung dienenden Sockel der Basisplatte entfallen, weil die Flanken der Langlöcher an dem zylindrischen Schaft der Befestigungsschraube zwischen einem Gewindegang geführt sind. Auch bei dieser Ausgestaltung ist die zentrierte Lage der Befestigungsschraube im mittleren Bereich der Langlöcher gewährleistet, weil durch die vormontierten Befestigungsschrauben die Basisplatte reibschlüssig in Anlage an die Deckplatte gehalten ist.

Ausführungsbeispiele der Erfindung werden nachstehend anhand der Zeichnung näher erläutert. In dieser zeigt

Fig. 1 einen Schnitt durch die aus Basisplatte und Deckplatte bestehende Grundplatte mit vormontierten Befestigungsschrauben und durch die mit den Befestigungsbohrungen versehene Tragwand längs der Linie I-I in Fig. 2,

Fig. 2 eine Draufsicht auf die Grundplatte nach Fig. 1 ohne vormontierte Befestigungsschrauben,

Fig. 3 eine Draufsicht auf den mit dem Langloch versehenen Bereich der Grundplatte mit geschnittener Befestigungsschraube in vergrößerter Darstellung,

Fig. 4 einen Schnitt durch die Grundplatte längs der Linie IV-IV in Fig. 3,

Fig. 5 einen Schnitt durch die Grundplatte ohne Befestigungsschrauben längs der Linie V-V in Fig. 3,

Fig. 6 einen Schnitt entsprechend Fig. 4 durch eine andere Ausführungsform der Grundplatte und

Fig. 7 einen der Fig. 4 entsprechenden Schnitt durch eine Grundplatte mit einer Basisplatte ohne Dübel.

Die Grundplatte 1 besteht aus einer in Draufsicht rechteckigen Basisplatte 2 mit abgerundeten Ecken und einer diese vollständig übergreifenden Deckplatte 3.

Die Deckplatte 3 besteht aus einem Stanzteil aus Stahlblech und weist einen zentralen, U-förmig nach außen gewölbten profilierten Bereich 4 auf, der der Halterung des üblicherweise U-förmig profilierten Scharnierarms dient. Die Deckplatte 3 kann auch aus Druckguß, beispielsweise Zamak, bestehen. Der nicht dargestellte Scharnierarm übergreift mit seinen seitlichen Schenkeln den durch die U-förmige Profilierung gebildeten Befestigungssockel 4, der in seinem mittleren Bereich mit einer Gewindebohrung 5 versehen ist, die dem Einschrauben der Befestigungsschraube für den Scharnierarm dient.

Der zentrale, einen Befestigungssockel 4 bildende Mittelteil der Deckplatte 3 ist mit seitlichen flanschartigen Lappen 6 versehen, die der Befestigung der Grundplatte bzw. der Befestigungsplatte 3 an einer Tragwand o.dgl. dienen. Diese seitlichen lappenartigen Fortsätze sind mit einem umlaufenden, nach unten gebördelten Rand 7, 8 versehen, der sich über die angrenzenden seitlichen Bereiche 9, 10, 11, 12 des zentralen Teils fortsetzt.

Die Deckplatte 3 ist zu ihrer Längsmittellinie und zu ihrer Quermittellinie I-I symmetrisch ausgebildet, so daß sich die Grundplatte 1 sowohl zum Rechts- als auch zum Linksanschlag eines Gelenks eignet.

Die Deckplatte 3 ist in ihren seitlichen lappenartigen Fortsätzen 6 mit Langlöchern 15, 16 versehen, deren Mittellinien mit der Quermittellinie I-I fluchten.

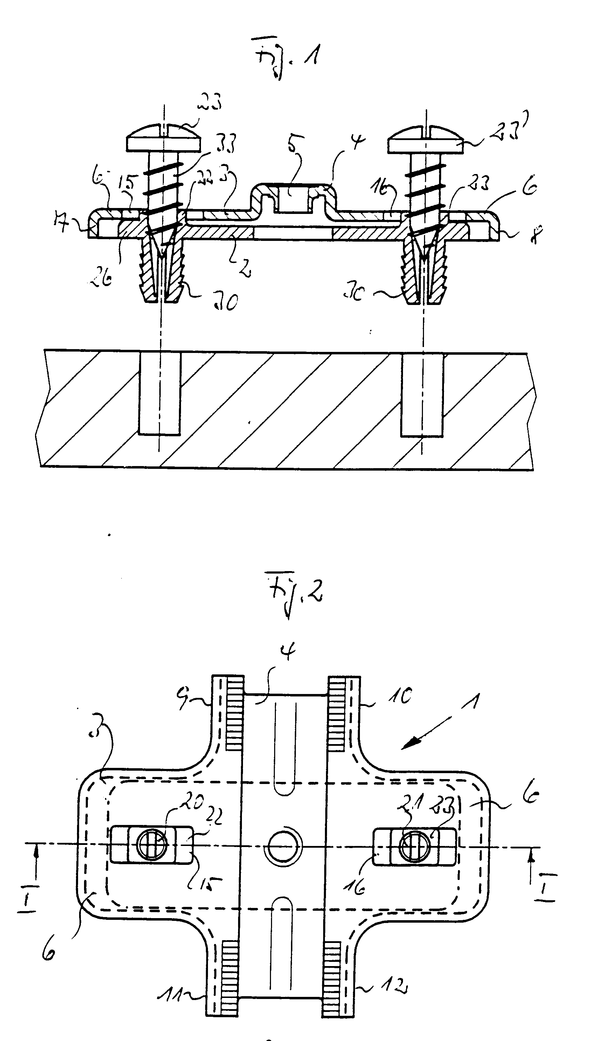

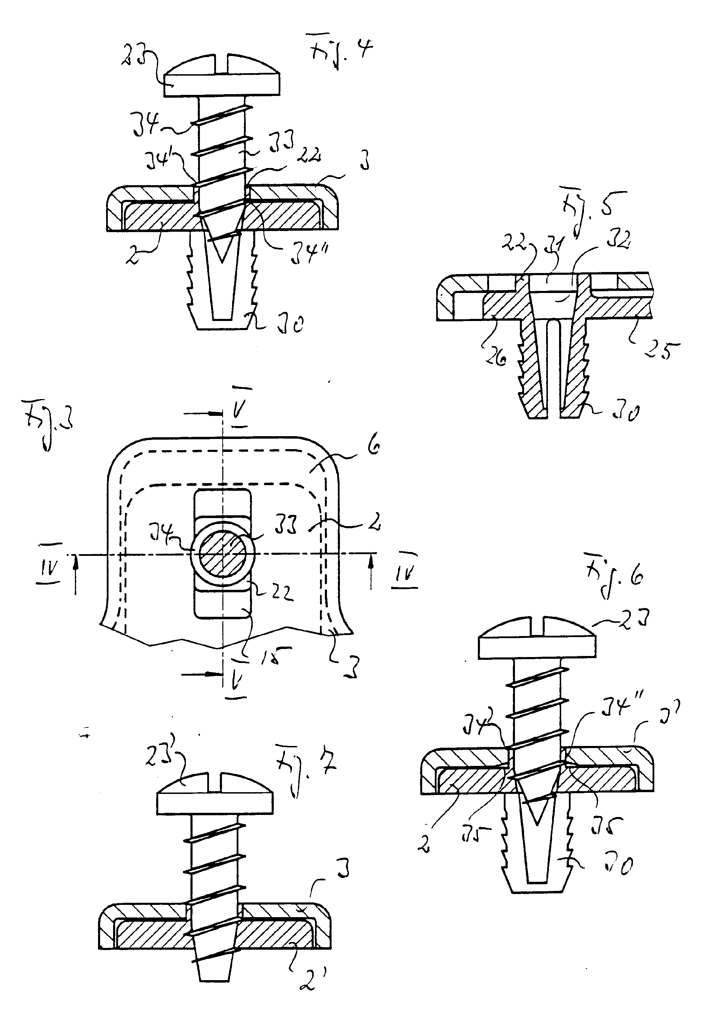

Die Basisplatte 2 weist im wesentlichen Rechteckform auf und ist in der aus den Fig. 1 und 2 ersichtlichen Weise von den umgebördelten Rändern 7, 8 der lappenartigen Fortsätze 5, 6 der Deckplatte 3 übergriffen. Die Basisplatte ist in ihren Endbereichen mit auf ihrer Längsmittellinie, die sich mit der Quermittellinie I-I der Deckplatte deckt, liegenden Bohrungen 20, 21 versehen, die der Aufnahme von Befestigungsschrauben 23 dienen. Die Bohrungen 20, 21 sind von sockelartigen Erhebungen 22, 23 eingefaßt, die in Draufsicht rechteckförmig ausgebildet sind und im montierten Zustand an ihren Seiten von den Flanken der Langlöcher 15, 16 der Deckplatte 3 eingefaßt sind. Die Sockel 22, 23 weisen eine Höhe auf, die geringer ist als die Dicke des Blechs der Deckplatte 3, so daß diese die Langlöcher 15, 16 nicht durchsetzen. Die Länge der Sockel 22, 23 ist in der aus den Fig. 1 und 2 ersichtlichen Weise kleiner als die der Langlöcher 15, 16, so daß sich die Deckplatte 3 auf der Basisplatte 2 längs der Quermittellinie I-I verschieben läßt, wobei die an den Seitenflanken der Langlöcher 15, 16 anliegenden Seiten der Sockel 22, 23 eine exakte Führung übernehmen.

Um eine Querverschiebung der Deckplatte 3 zu ermöglichen, endet in der Mittelstellung die Basisplatte 2 im Abstand vor den umgebördelten Rändern 7, 8 der Deckplatte 3, wie dies aus den gestrichelten Umfangslinien in Fig. 2 ersichtlich ist. Da die Deckplatte 3 auf den sockelartigen Vorsprüngen 22, 23 der Basisplatte 2 geführt ist, ist zwischen den Seiten der Basisplatte 2 und den seitlichen umgebördelten Rändern der lappenartigen Fortsätze 6 der Deckplatte 3 ein Spiel vorgesehen.

Die Basisplatte 2 besteht aus einem geeigneten Kunststoff. Bei dem Ausführungsbeispiel nach den Fig. 1 bis 6 besteht die Basisplatte 2 aus einem einstückigen Kunststoffspritzgußteil, das auf seiner Unterseite im Bereich der Bohrungen 20, 21 mit Dübeln 30 versehen ist, deren Mittellinien mit den Mittellinien der Bohrungen fluchten. Die Dübel sind in bekannter Weise mit einander gegenüberliegenden Längsschlitzen und auf ihrer äußeren Mantelfläche mit einem sägezahnförmigen Profil versehen.

Im Bereich der Sockel 22, 23 weisen die Bohrungen 20, 21 Abschnitte 31 mit einem Durchmesser auf, der etwa dem Kerndurchmesser 33 der Befestigungsschrauben 23 entspricht. An diesen Bohrungsabschnitt 31 schließt sich ein Bohrungsabschnitt 32 mit sich nach unten hin konusförmig verringerndem Durchmesser an, in den das Gewinde 34 der Befestigungsschrauben 23, 23′ bei der Vormontage einschneiden kann.

Bei der Vormontage werden die Befestigungsschrauben 23, 23′ mit ihrem Kern 33 in dem ersten Bohrungsabschnitt 31 in genau senkrechter Richtung zur Deckplatte 3 geführt und in den zweiten Abschnitt 32 nur teilweise eingeschraubt, so daß sie sicher in ihrer senkrechten Lage gehalten sind, ohne die Dübel 30 zu spreizen.

Die Befestigungsschrauben 23, 23′ weisen Gewinde 34 mit einer Steigung oder einer Ganghöhe auf, die größer ist als die Dicke der Deckplatte 3. Die Steigung des Gewindes 34 der Befestigungsschrauben ist also so groß, daß der Abstand aufeinanderfolgender Gewindegänge mindestens doppelt so groß ist wie die Dicke der Deckplatte 3 im Randbereich der Langlöcher 15, 16.

Durch die Vormontage stützt sich ein Flankenteil 34′ des Gewindes 34 an einem oberen Randbereich der Langlöcher 15, 16 ab, während der diesem Flankenteil diametral gegenüberliegende Flankenteil 34′ des Gewindes sich schon unterhalb der Deckplatte 3 in die Basisplatte 2 eingeschnitten hat. Der Durchmesser der Gewinde 34 ist größer als die Breite der Langlöcher 15, 16, während der Kerndurchmesser des Schraubenschafts 33 vorzugsweise kleiner ist als die Breite der Langlöcher 15, 16, so daß die Abstützung einer Flanke des Gewindes auf einem Randbereich der Langlöcher 15, 16 bei senkrecht in den Bohrungen der Basisplatte gehaltenen Befestigungsschrauben gesichert ist.

Da die Gewinde 34 der Befestigungsschrauben 23, 23′ wegen ihrer großen Gewindesteigung nicht in die Flanken der Langlöcher 15, 16 einschneiden können, kann die Deckplatte 3 zur Höhenverstellung auf der Basisplatte immer noch in Längsrichtung der Langlöcher verschoben werden, bevor die Befestigungsschrauben vollständig eingeschraubt und angezogen sind.

Nach dem Ausführungsbeispiel der Fig. 6 sind die Langlöcher 15, 16 im Bereich ihrer Ränder auf ihren Unterseiten mit Abschrägungen 35 versehen, so daß die Ränder der Langlöcher der Deckplatte eine Dicke erhalten, die der Gewindesteigung von üblichen Schrauben angepaßt ist.

Da der Gewindedurchmesser der Befestigungsschrauben 23, 23' größer ist als die Breite der Langlöcher 15, 16, ist die Basisplatte 2 in Anlage an die Deckplatte 3 gehalten, weil die Befestigungsschrauben in senkrechter Lage in den Befestigungsbohrungen der Basisplatte gehalten sind und somit die Gewinde nicht durch die Langlöcher hindurchtreten können. Selbst wenn zufälligerweise ein Druck auf die Befestigungsschrauben ausgeübt werden sollte, kommt es zu keinem Lösen der Basisplatten von den Deckplatten und die voreingestellte zentrierte Lage bleibt beibehalten.

Bei dem Ausführungsbeispiel nach Fig. 7 ist eine im wesentlichen flache Basisplatte 2' ohne einstückig angegossene Dübel vorgesehen. In diesem Fall dient die Basisplatte 2' nur zur zentrierten Vormontage der Befestigungsschrauben 23, 23', die vorzugsweise in der aus Fig. 7 ersichtlichen Weise keine spitzen, sondern kegelstumpfförmige Enden aufweisen. Die die Basisplatte 2' durchsetzenden Enden der Befestigungsschrauben werden bei der Montage in die vorgebohrten Befestigungslöcher an der Tragwand eingesetzt, so daß die Montage erleichtert ist.

Nach einer bevorzugten Ausführungsform ist vorgesehen, daß die Befestigungsschrauben mit doppelgängigen Gewinden mit der beschriebenen Ganghöhe versehen sind. Diese Ausgestaltung gewährleistet, daß sich an gegenüberliegenden oberen Randbereichen der Langlöcher der Deckplatte jeweils gegenüberliegende Flanken der beiden Gewindegänge abstützen, so daß eine symmetrische Abstützung und eine verbesserte Halterung der Basisplatte 2 an der Deckplatte 3 gewährleistet ist.

**Patentansprüche**

1. Grundplatte (1) zur Befestigung eines Scharnierarms eines Möbelscharniers o.dgl., bestehend aus einer mit Bohrungen (20,21) für die Befestigungsschrauben (23,23') versehenen und an einer Tragwand o.dgl. befestigbaren Basisplatte und (2) einer diese zumindest teilweise übergreifenden oder überdeckenden und auf dieser quer zum Scharnierarm o.dgl. verschieblich geführten Deckplatte (3) mit Befestigungseinrichtungen für den Scharnierarm, wobei in die Bohrungen (20,21) der Basisplatte (2) vormontierte Befestigungsschrauben (23,23') teilweise eingeschraubt sind, die Langlöcher (15,16) der Deckplatte (3) durchsetzen,
**dadurch gekennzeichnet,**
daß der Gewindedurchmesser der Befestigungsschrauben (23,23') größer ist als die Breite der Langlöcher (15, 16) ist, und daß die Steigung der Gewinde (34) (Ganghöhe oder Abstand der Gewindegänge voneinander) der Befestigungsschrauben (23, 23') mindestens doppelt so groß ist wie die Dicke der Deckplatte (3) im Randbereich der Langlöcher (15, 16), so daß jeweils ein Flankenabschnitt (34') jedes Gewindes (34) am oberen Kantenbereich eines Randes der Langlöcher (15, 16) aufliegt und dadurch die Basisplatte (2) in Anlage an die Deckplatte (3) hält.

2. Grundplatte nach Anspruch 1, dadurch gekennzeichnet, daß die Bohrungen für die Befestigungsschrauben (23,23') im Bereich von Sockeln (22,23) der Basisplatte mit einem Bohrungsrabschnitt (31) versehen ist, dessen Durchmesser dem Kerndurchmesser (33) der Befestigungsschrauben (22, 23) entspricht.

3. Grundplatte nach Anspruch 2, dadurch gekennzeichnet, daß die Bohrungen (23,23') mit einem weiteren, tieferliegenden Bohrungsabschnitt (32) versehen sind, dessen Durchmesser kleiner als der Kerndurchmesser der Befestigungsschrauben ist.

4. Grundplatte nach einem der Ansprüche 1 bis 3, dadurch gekennzeichnet, daß die Steigung (Ganghöhe) des Gewindes (34) der Befestigungsschrauben (23, 23') der doppelten Dicke der Deckplatte (3) im Randbereich der Langlöcher (15, 16) entspricht.

5. Grundplatte nach einem der Ansprüche 1 bis 4, dadurch gekennzeichnet, daß die Befestigungsschrauben (23, 23') mit einem doppelgängigen Gewinde versehen sind.

6. Grundplatte nach einem der Ansprüche 1 bis 5, dadurch gekennzeichnet, daß die Basisplatte (2) auf ihrer Unterseite einstückig mit Dübeln (30) versehen ist, deren Bohrungen mit den Bohrungen der Basisplatte fluchten.

7. Grundplatte nach einem der Ansprüche 1 bis 6, dadurch gekennzeichnet, daß die Randbereiche der Langlöcher (15, 16) durch an ihrer Ober- oder Unterseite vorgesehene Abschrägungen (35), Abrundungen oder die Dicke vermindernden Stufen gebildet sind.

8. Grundplatte nach einem der Ansprüche 1 bis 7, dadurch gekennzeichnet, daß die Breite der Langlöcher (15,16) der Deckplatte (3) dem Kerndurchmesser der Befestigungsschrauben (23,23') entspricht.

**Revendications**

1. Plaque d'assise (1) pour la fixation d'un bras de charnière d'une charnière de meuble ou analogue, se composant d'une plaque de base (2) pourvue d'alésages (20,20') pour des vis de fixation (23,23′) et pouvant être fixée à une paroi de support ou analogue, et d'une plaque de recouvrement (3) venant en prise au moins partiellement au-dessus de celle-ci ou la recouvrant au moins partiellement et guidée de façon déplaçable sur celle-ci, perpendiculairement au bras de charnière ou analogue, avec des dispositifs de fixation pour le bras de charnière, des vis de fixation prémontée (23,23′) étant partiellement vissées dans les alésages (20,21) de la plaque de base (2), et qui traversent des trous oblongs (15,16) de la plaque de base,

**caractérisée,**

en ce que le diamètre de filet des vis de fixation (23,23′) est plus grand que la largeur des trous oblongs (15,16) et que le pas de filet (34) (hauteur de pas ou écart des spires) des vis de fixation (23,23′) est au moins de deux fois l'épaisseur de la plaque de recouvrement (3) dans la zone latérale ou de bord des trous oblongs (15,16) de façon que chaque fois un segment de flanc (34′) de chaque filet (34) prenne appui sur la zone d'arête supérieure d'un bord des trous oblongs (15,16) et maintienne ainsi la plaque de base (2) en application sur la plaque de recouvrement (3).

2. Plaque d'assise selon la revendication 1, caractérisée en ce que les alésages pour les vis de fixation (23,23′) sont pourvus dans la zone de socle (22,23) de la plaque de base d'un segment d'alésage dont le diamètre correspond au diamètre de noyau (33) des vis de fixation (22,23).

3. Plaque d'assise selon la revendication 2, caractérisée en ce que les alésages (23,23′) sont pourvus d'une autre portion d'alésages (32) situés plus bas, dont le diamètre est inférieur au diamètre de noyau des vis de fixation.

4. Plaque d'assise selon l'une des revendications 1 à 3, caractérisée en ce que le pas du filet (34) des vis de fixation (23,23′) correspond à la double épaisseur de la plaque de recouvrement (3) dans la zone de bord des trous oblongs (15,16).

5. Plaque d'assise selon l'une des revendications 1 à 4, caractérisée en ce que les vis de fixation (23,23′) sont pourvues de deux filets.

6. Plaque d'assise selon l'une des revendications 1 à 5, caractérisée en ce que la plaque de base (2) est pourvue sur sa face inférieure de chevilles (23) réalisée en une pièce avec la plaque, dont les alésages sont alignés aux alésages de la plaque de base.

7. Plaque d'assise selon l'une des revendications 1 à 6, caractérisée en ce que les zones de bord des trous oblongs (15,16) sont formées par des chanfreins (35), des arrondis ou des étages réduisant l'épaisseur, qui sont prévus à leurs surfaces supérieure ou inférieure.

8. Plaque d'assise selon l'une des revendications 1 à 7, caractérisée en ce que la largeur des trous oblongs (15,16) de la plaque de recouvrement (3) correspond au diamètre du noyau des vis de fixation (23,23′).

**Claims**

1. A base plate (1) for fastening a hinge arm of a furniture hinge or the like, consisting of a bed plate (2) provided with drill holes (20, 21) for the fastening screws (23, 23′) that can be fastened on a carrying wall or the like, and of a cover plate (3) overlapping or covering the bed plate at least in part, and being carried thereon for displacement transversely to the hinge arm or the like, with fastening devices for the hinge arm, in which arrangement premounted fastening screws (23, 23′) are partly screwed into the drill holes (20, 21) of the bed plate (2) which pass through slots (15, 16) of the cover plate (3),

**characterized in that**

the thread diameter of the fastening screws (23, 23′) is greater than the width of the slots (15, 16) and that the pitch of the threads (34) (lead or interspacing of the threads) of the fastening screws (23, 23′) is at least twice the thickness of the cover plate (3) in the edge zone of the slots (15, 16), so that respectively one flank section (34′) of each thread (34) bears on the upper edge zone of an edge of the slots (15, 16) and thereby holds the bed plate (2) applied against the cover plate (3).

2. A base plate according to claim 1, characterized in that the drill holes for the fastening screws (23, 23′) is provided in the region of the base block (22, 23) of the bed plate with a drill hole section (31) whose diameter corresponds to the core diameter (33) of the fastening screws (22, 23).

3. A base plate according to claim 2, characterized in that the drill holes (23, 23′) are provided with a further deeper drill hole section (32) whose diameter is smaller than the core diameter of the fastening screws.

4. A base plate according to one of claims 1 to 3, characterized in that the pitch (lead) of the thread (34) of the fastening screws (23, 23′) corresponds to twice the thickness of the cover plate (3) in the edge zone of the slots (15, 16).

5. A base plate according to one of claims 1 to 4, characterized in that the fastening screws (23, 23') are provided with a double thread.

6. A base plate according to one of claims 1 to 5, characterized in that, at its bottom the bed plate (2) is integrally provided with dowels (30) whose drill holes are aligned with the drill holes of the bed plate.

7. A base plate according to one of claims 1 to 6, characterized in that at their top or bottom, the edge zones of the slots (15, 16) are formed by chamfers (35), rounded portions or thickness-reducing steps.

8. A base plate according to one of claims 1 to 7, characterized in that the width of the slots (15, 16) of the cover plate (3) corresponds to the core diameter of the fastening screws (23, 23').

Fig. 1

Fig. 2

Fig. 4

Fig. 5

Fig. 3

Fig. 6

Fig. 7